# EUROPÄISCHE PATENTSCHRIFT

(11) **EP 2 243 721 B1**
(45) Veröffentlichungstag und Bekanntmachung des Hinweises auf die Patenterteilung: **23.01.2013**
(21) Anmeldenummer: 10003187.1
(22) Anmeldetag: 25.03.2010
(51) Int. Cl.: B65D 83/04, B65D 83/06, G01F 11/26

(54) **Dosierbehältnis**
Dosing container
Récipient doseur

(30) Priorität: 22.04.2009 DE 102009018349
(43) Veröffentlichungstag der Anmeldung: 27.10.2010
(73) Patentinhaber: Kautex Textron GmbH & Co. KG, 53229 Bonn (DE)
(72) Erfinder: Dörries, Klaus, 53773 Hennef (DE); Schneider, Tom, 53859 Niederkassel (DE); Guse, Christoph, 53359 Rheinbach (DE)
(74) Vertreter: Polypatent

(56) Entgegenhaltungen:
- EP-A1- 0 492 534
- EP-A1- 1 041 368
- WO-A1-2009/012429
- DE-A1- 1 911 628
- US-A- 3 258 177
- US-A- 4 144 989

## Beschreibung

Die Erfindung betrifft ein Dosierbehältnis, insbesondere eine Dosierflasche, mit wenigstens einem Vorratsbehälter und wenigstens einer Dosierkammer, die über eine Dosieröffnung miteinander verbunden sind, wobei der Dosierbehälter mit wenigstens einer in aufgestellter Lage oberen Entnahmeöffnung versehen ist, die gegenüberliegend einer Aufstellfläche des Dosierbehältnis angeordnet ist.

Eine Dosierflasche der eingangsgenannten Art ist beispielsweise aus der EP 2 008 940 A2 bekannt. Diese Dosierflasche für Schüttgut sowie Granulat oder körniges Material umfasst einen Vorratsbehälter und eine Dosierkammer, die mit dem Vorratsbehälter über eine Dosieröffnung oder einen Dosierkanal verbunden ist, wobei die Dosierkammer mit einem Ausgießkanal verbunden ist. Die Dosierkammer ist unterhalb des Vorratsbehälters angeordnet, sodass das Material aus dem Vorratsbehälter unter Schwerkrafteinwirkung in den Dosierbehälter bzw. in den Dosierkanal fließt. Eine differenzierte Dosierung oder gar eine Rückführung von einmal in die Dosierkammer abgegebenem Material in das Vorratsvolumen ist mit einer solchen Anordnung nicht möglich. Darüber hinaus ist das Material innerhalb des Vorratsbehälters immer in unmittelbarem Kontakt mit dem Material in der Dosierkammer. Schließlich wird das Nachströmen von Material in die Dosierkammer nur bei einem bestimmten Kippwinkel der Dosierflasche vermieden. Auch dies erschwert eine differenzierte Dosierung.

Bei bestimmten Insektiziden, Herbiziden, Pestiziden und andere Chemikalien, die in exakt dosierter Menge abgegeben werden müssen, ist eine differenzierte Dosierung des zumeist körnigen oder pulverartigen Materials erforderlich. Bei Überdosierung ist eine Rückführung des Materials in das Vorratsbehältnis wünschenswert. Auch soll ein unbeabsichtigtes Nachströmen vom Material aus dem Vorratsbehälter in das Dosierbehältnis bzw. in die Dosierkammer unterbunden werden.

Eine verbesserte Dosierflasche bzw. Mess- und Spendervorrichtung für granulat- oder pulverförmige Produkte ist beispielsweise aus der EP 0 619 875 B1 bekannt. Die dort beschriebene Dosierflasche umfasst in bekannter Art und Weise ein Vorratsvolumen bzw. einen Vorratsbehälter sowie einen Dosierbehälter, der räumlich oberhalb des Vorratsbehälters angeordnet ist und in eine obere Öffnung der Flasche eingesetzt wird. Der Dosierbehälter umfasst einen Aufnahmeraum für ein zudosierendes Produktvolumen und ist durch ein Boden abgeschlossen sowie mit einem darbüberliegenden Sammelraum durch eine Verbindungswand verbunden. Diese Verbindungswand besitzt eine obere Öffnung, welche einen Zugang zu dem Vorratsvolumen bzw. Vorratsbehälter bildet. Die Verbindungsöffnung bzw. der Dosierkanal zwischen dem Vorratsbehälter und dem Dosierbehälter ist so angeordnet, dass die betreffende Öffnung in der aufrechten Stellung des Behälters als Überlauf wirkt. Dabei fällt die Produktmenge, die in die Dosierkammer eintritt und die Menge übersteigt, welche der Aufnahmeraum aufnehmen kann, in den Behälter zurück, wenn dieser in seine aufrechte Stellung zurückgeführt wird.

Durch die räumliche Anordnung der Dosierkammer oberhalb des Vorratsbehälters ist allerdings eine differenzierte Dosierung mit der Dosierflasche nach der EP 061 987 B1 nicht möglich.

Unter einer differenzierten Dosierung im Sinne der Erfindung ist die Einbringung unterschiedlicher vorgegebener Abgabemengen in die Dosierkammer zur Erzielung verschiedener Dosagen zu verstehen.

Ein Spender nach Oberbegriff von Anspruch 1 ist beispielsweise aus der EP 0 492 534 A1 bekannt. Diese offenbart einen Spender für insbesondere pulverförmige bzw. körnige Massen mit einer Vorratskammer, einer Portionierungskammer und einer Ausgabekammer mit einer Ausgabeöffnung welche Ausgabekammer durch eine Zwischenwand von der Portionierungskammer getrennt ist, wobei durch ein erstmaliges Umkippen die Masse in die Portionierungskammer gelangt und von dort beim Zurückkippen in die Ausgabekammer, und beim zweiten Umkippen die portionierte Masse ausgegeben wird. Der Spender umfasst weiterhin ein Verschlussteil, das im Verschlusszustand sowohl eine Durchgangsöffnung von der Vorratskammer zu der Portionierungskammer als auch die Ausgabeöffnung verschließt. An dem Verschlussteil ist ein Sperrteil ausgebildet, zur Sperrung der Durchgangsöffnung von der Vorratskammer zu der Portionierungskammer in dem Verschlusszustand, welches Sperrteil im Zuge einer Schließbe wegung des Verschlussteils durch eine Öffnung einer Decke der Portionierungskammer verschiebbar ist. Das Einbringen von Schüttgut aus der Vorratskammer in die Positionierkammer ist nur bei geöffnetem Verschlussteil möglich.

Ein ähnliches Dosierbehältnis ist beispielsweise aus der WO 2009/012429 A1 bekannt.

Aus der EP 1 041 368 A1 ist eine Dosierflasche für Fixdosierungen von Flüssigkeiten bekannt, die ebenfalls ein Vorratsvolumen und eine Dosierkammer umfasst. Die Dosierkammer ist mit einer Durchgangsöffnung zum Flascheninneren abgetrennt. Sie kommuniziert mit einem Ausgussrohr, das im Flascheninneren zum Ausguss geführt ist, derart, dass bei jedem Kippen der Flasche aus der aufrechten Lage um 90° in eine Ausgießlage einzig der Inhalt der Dosierkammer ausgießbar ist.

Der Erfindung liegt daher die Aufgabe zugrunde, ein Dosierbehältnis, insbesondere eine Dosierflasche der eingangsgenannten Art dahingehend zu verbessern, dass eine gezielte Rückführung von Material aus dem Vorratsbehälter möglich ist, insbesondere soll eine differenzierte Dosierung möglich sein.

Die Aufgabe wird gelöst durch ein Dosierbehältnis nach Anspruch 1.

Hierzu kann beispielsweise vorgesehen sein, dass das Absperrorgan als Schieber ausgebildet ist, der mit einem drehbaren Verschlussteil der Entnahmeöffnung verbunden ist.

Zweckmäßigerweise befindet sich das Absperrorgan bei verschlossener Entnahmeöffnung in der die Dosieröffnung freigebenden Stellung, sodass in diesem Fall eine differenzierte Befüllung des Dosierbehälters möglich ist.

Bei einer vorteilhaften Ausgestaltung des Dosierbehältnis nach der Erfindung ist vorgesehen, dass der Vorratsbehälter und die Dosierkammer miteinander über einen sich in Richtung der Dosierkammer verjüngenden Dosierkanal verbunden sind. Je nach Füllgut (flüssig, gelartig, körnerartig oder pulverartig) kann die Einlaufschräge des Befüllkanals individuell angepasst sein. Eine schräge Ausbildung des Dosierkanals bzw. dessen Öffnung in die Dosierkammer ergibt eine gleichmäßige und schnelle Befüllung der Dosierkammer. Durch einen sich verjüngenden bzw. konisch ausgebildeten Dosierkanal ergibt sich eine optimale Restentleerung des Vorratsbehälters.

Bei einer Ausgestaltung des Dosierbehältnises gemäß der Erfindung ist vorgesehen, dass der Dosierkanal sich in einem Winkel zu dem Füllgutspiegel des aufgestellten Behältnis erstreckt.

Bei einer zweckmäßigen Ausgestaltung des Dosierbehältnises gemäß der Erfindung ist vorgesehen, dass die Dosieröffnung oder der Dosierkanal in aufgestellter Lage des Dosierbehältnises in den oberen Bereich der Dosierkammer mündet. Dies ist insbesondere bei sich nebeneinander erstreckenden Volumina der Dosierkammer einerseits und des Vorratsbehältnises andererseits vorteilhaft. Die Erfindung ist jedoch so zu verstehen, dass die Dosieröffnung bzw. der Dosierkanal auch in einen anderen Bereich der Dosierkammer münden kann.

Wenn der Dosierkanal, wie vorstehend ausgeführt, in den obersten Bereich der Dosierkammer mündet und die Dosierkammer und das Vorratsbehältnis nebeneinander angeordnet sind, kann dies nicht nur der Vorzug, dass sich der Vorratsbehälter vollständig restentleeren lässt, sondern auch den Vorzug, dass das Absperrorgan zum Verschließen der Dosieröffnung verhältnismäßig einfach ausgestaltet sein kann.

Die Entnahmeöffnung des Dosierbehältnises kann mit einem mehrteiligen Verschluss versehen sein, wobei ein erstes Verschlussteil als drehbares Verschlussteil und ein zweites Verschlussteil als schwenkbares Deckelverschlussteil ausgebildet sein kann.

Das zweite Verschlussteil kann beispielsweise mit einem Verrieglungselement verseht sein, das nur in einer bestimmten Winkelstellung des ersten Verschlussteils ver- und entriegelbar ist.

Bei einer bevorzugten Ausbildung des Dosierbehältnises gemäß der Erfindung ist vorgesehen, dass der Verschluss der Entnahmeöffnung einer Lochblende umfasst, die in einer Winkelstellung des drehbaren Verschlussteils freigegeben ist, hingegen in einer anderen Winkelstellung des drehbaren Verschlussteils geschlossen ist.

Die Dosierkammer und der Vorratsbehälter können beispielsweise einstückig miteinander verbunden sein. Hierzu kann das Dosierbehältnis beispielsweise einstückig durch Extrusionsblasformen hergestellt worden sein. Dabei können die verschiedenen Volumina des Dosierbehältnises durch Wand-zu-Wand-Verschweißungen der Umfassungswände realisiert sein.

Das Dosierbehältnis bzw. die Dosierflasche gemäß der Erfindung kann mit einer Kindersicherung sowie mit einem Originalitätsverschluss versehen sein.

Die Erfindung wird nachstehend an Hand eines in der Zeichnungen dargestellten Ausführungsbeispiels erläutert.

Es zeigen:
- Figur 1: eine perspektivischen Einsicht des Dosierbehältnises gemäß der Erfindung,
- Figur 2: einen Längsschnitt durch das Behältnis aus Figur 1,
- Figur 3: einen Querschnitt entlang der Linien III-III in Figur 2,
- Figur 4: einen Teilschnitt durch das Dosierbehältnis in gekipptem Zu- stand,
- Figur 5: eine Schnittansicht entlang der Linie V-V in Figur 4,
- Figur 6: einen Längsschnitt durch das Behältnis in gegenüber der Aufstelllage gekippter Lage (Rückdosierung),
- Figur 7: eine der Figur 6 entsprechenden Schnittansicht des Dosier- behältnises in entgegengesetzt gekippter Lage bei verschlos- senem Dosierkanal,
- Figuren 8 und 9: jeweils Teilansichten alternativer Gestaltungen des Dosier- verhältnises im Schnitt,
- Figur 10: eine perspektivische Explosionsansicht des Verschlusses für die Entnahmeöffnung des Dosierbehältnis gemäß der Erfin- dung,
- Figur 11: eine geschnittene Teilansicht des auf die Entnahmeöffnung aufgesetzten Verschlusses,
- Figur 12: entlang der Linien XII-XII in Figur 11,
- Figur 13: eine Teilansicht des geöffneten Verschlusses von Vorn,
- Figur 14: eine Teilansicht des geschlossenen Verschlusses von Vorn,

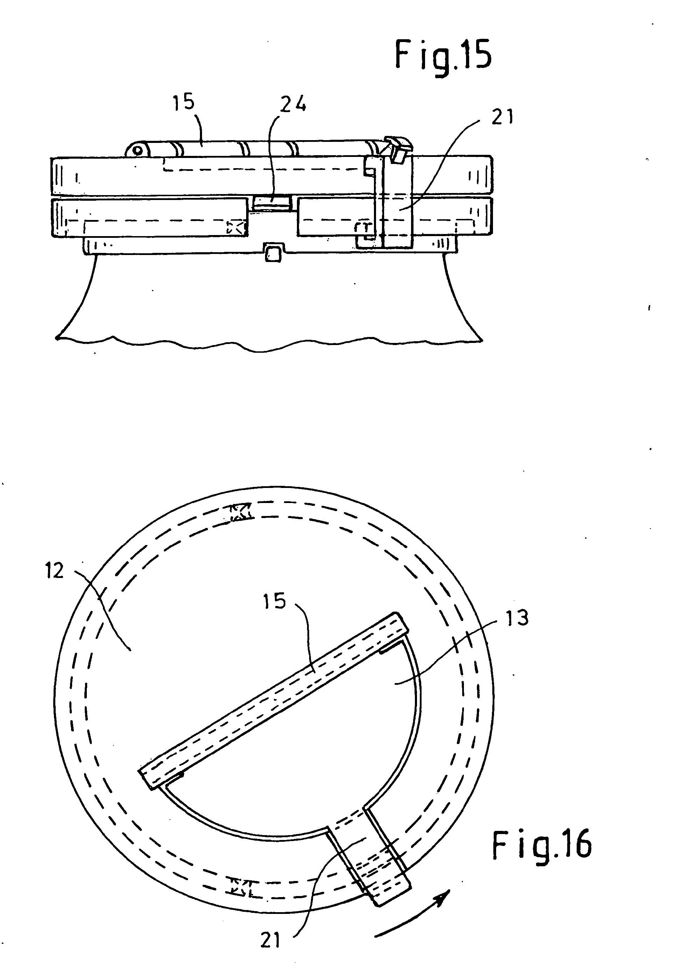

- Figur 15: eine der Figur 14 entsprechende Ansicht, bei der das drehba- re Verschlussteil sich in einer Zwischenstelle zwischen der entriegelten und verriegelten Position befindet,
- Figur 16: eine Draufsicht auf das in Figur 15 dargestellte Figurteil in der entsprechenden Winkelstellung,
- Figur 17: eine Schnittansicht des Verschlussteils in der verriegelten Stellung und
- Figur 18: eine Draufsicht auf das Verschlussteil in der in Figur 17 ge- zeichneten Stellung.

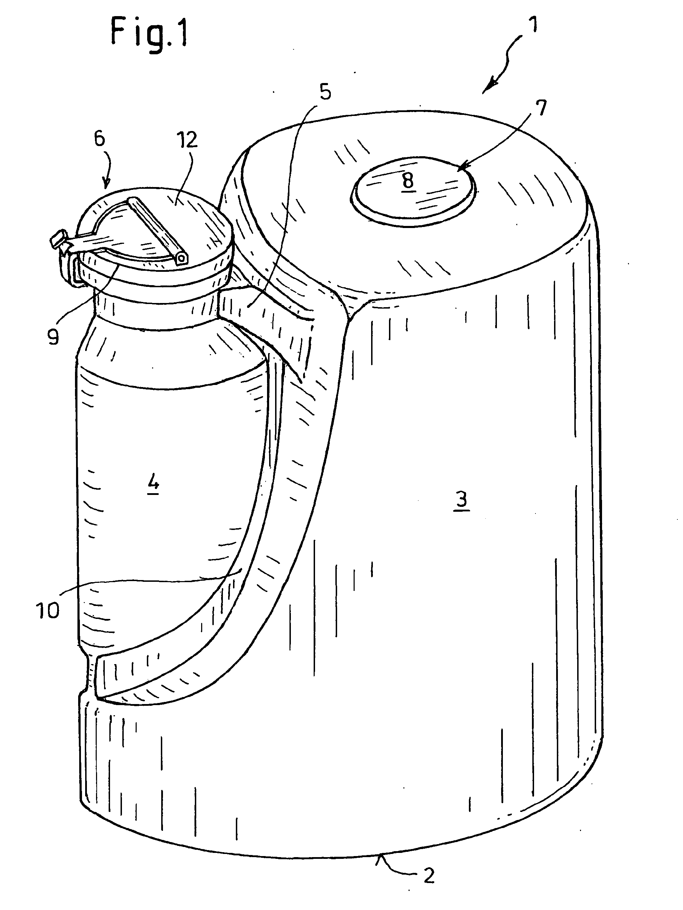

Das Dosierbehältnis gemäß der Erfindung ist in perspektivischer Ansicht in Figur 1 dargestellt. Dabei handelt es sich insbesondere um eine durch Extrusionsblasformen hergestellte Dosierflasche 1 aus thermoplastischen Kunststoff. Auch wenn das Dosierbehältnis gemäß der Erfindung nachstehend als Dosierflasche 1 bezeichnet wird, so ist dies jedoch so zu verstehen, dass es sich hierbei um ein Kanister, ein Fass oder dergleichen Behältnis handeln kann.

Die Dosierflasche 1 ist insbesondere für die Aufnahme von körnigen bis pulverigen schüttfähigen Inhalten vorgesehen, diese kann allerdings für die Aufnahme von Flüssigkeiten optimiert sein.

Die Dosierflasche 1 umfasst eine im Wesentlichen ebene Aufstellfläche 2, die bei den dargestellten Ausführungsbeispielen ausschließlich einen Vorratsbehälter 3 begrenzt, der einen wesentlichen Teil des Volumens der Dosierflasche 1 ausmacht. Neben dem Vorratsbehälter erstreckt sich über etwa 2/3 der Höhe der Dosierflasche 1 eine Dosierkammer 4, die ein gegenüber dem Vorratsbehälter 3 separates Volumen bildet. Die Dosierkammer 4 und der Vorratsbehälter 3 sind über einen Dosierkanal 5 miteinander verbunden.

An dem von der Aufstellfläche 2 abliegenden Ende der Dosierflasche 1 ist diese mit einer Entnahmeöffnung 6 und einer Befüllöffnung 7 versehen.

Bei dem dargestellten Ausführungsbeispiel ist die Befüllöffnung 7 in dem Vorratsbehälter 3 vorgesehen, wohingegen die Entnahmeöffnung 6 die Dosierkammer 4 verschließt.

In konfektioniertem Zustand kann die Befüllöffnung 7 mit einer Verschlusskappe 8 dauerhaft verschlossen sein. Hierzu kann die Verschlusskappe 8 mit der Außenfläche der Dosierflasche randseitig der Entnahmeöffnung 6 verschweißt worden sein. Es ist alternativ allerdings auch möglich, die Befüllöffnung mit einem Schnapp- oder Schraubverschluss zu verschließen. Bei dem beschriebenen Behälter ist allerdings eine Wiederbefüllung nach Konfektionierung nicht vorgesehen.

Die Entnahmeöffnung 6 ist hingegen mit einem wiederverschließbaren Deckelverschluss 9 verschlossen. Der Deckelverschluss 9 wird nachstehend im Einzelnen erläutert werden.

Die Dosierkammer 4 und der Vorratsbehälter 3 sind durch einen Materialsteg 10 miteinander verbunden, wobei dieser Materialsteg 10 durch Wand-zu-Wand-Verschweißung beim Extrusionsblasformen der Dosierflasche 1 erhalten wurde. Die Dosierkammer 4 und der Vorratsbehälter 3 können nur über den mittels eines Absperrorgans verschließbaren Dosierkanal 5 miteinander kommunizieren.

Eine Entnahme von Füllgut aus der Dosierflasche 1 erfolgt zunächst von dem Vorratsbehälter 3 in die Dosierkammer 4 und von der Dosierkammer 4 durch die Entnahmeöffnung 6.

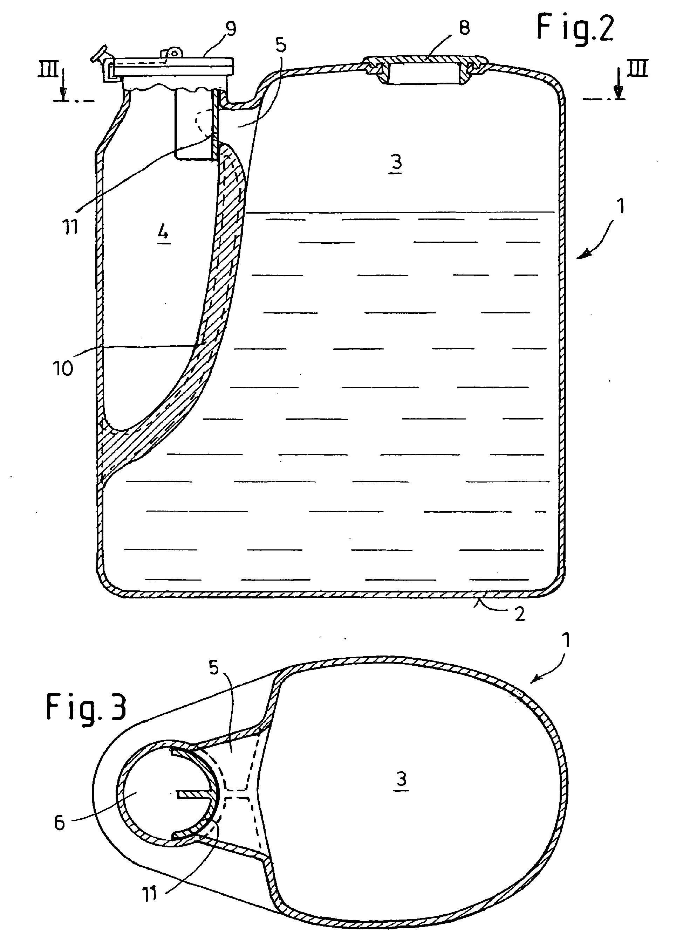

Im Folgenden wird zunächst Bezug genommen auf die Figur 2, in welcher die Dosierflasche 1 im Längsschnitt dargestellt ist. Wie insbesondere dieser Schnittansicht aber auch der perspektivischen Ansicht zu entnehmen ist, erstreckt sich die Dosierkammer 4 nicht bis zur Aufstellfläche 2 der Dosierflasche. Dies ist bei dem beschriebenen Ausführungsbeispiel allerdings vorwiegend aus gestalterischen Gründen der Fall. Grundsätzlich ist es möglich, dass die Dosierkammer 4 und der Vorratsbehälter 3 zwei zueinander parallele sich über die gesamte Höhe der Dosierflasche 1 erstreckende Volumina bilden.

Wie insbesondere den Schnittansichten in Figur 2 und 3 zu entnehmen ist, erstreckt sich der Dosierkanal am oberen von der Aufstellfläche 2 abliegenden Ende der Dosierflasche 1 in dem Vorratsbehälter 3 in einem Winkel zum Füllgutspiegel in die Dosierkammer 4, und zwar derart, dass das gesamte Volumen der Dosierkammer 4 mit Füllgut beaufschlagbar ist , ohne dass dieses bei aufrecht aufgestelltem Behältnis in den Vorratsbehälter 3 zurückläuft. Der Dosierkanal 5 ist von dem Vorratsbehälter 3 ausgehend aufwärts geführt, wobei dessen Querschnitt sich von dem Vorratsbehälter 3 in Richtung auf die Dosierkammer 4 verjüngt. Durch diese Geometrie des Dosierkanals 4 ist insbesondere eine vollständige Restentleerung des Vorratsbehälters 3 gewährleistet.

Wie insbesondere der Zusammenschau der Figur 2 und 3 zu entnehmen ist, verjüngt sich der Dosierkanal 5 sowohl in der Höhe als auch in der Breite, sodass sich insgesamt in etwa konischer Querschnitt des Dosierkanals ergibt.

Bei den in den Figuren 2 und 3 dargestellten Zustand der Dosierflasche 1 ist der Dosierkanal 5 mit einem Absperrschieber 11 versperrt, sodass die Dosierungskammer 4 und der Vorratsbehälter 3 nicht miteinander kommunizieren. Dies ist die für die Entnahme von Füllgut aus der Dosierkammer 4 vorgesehene Stellung des Absperrschiebers 11.

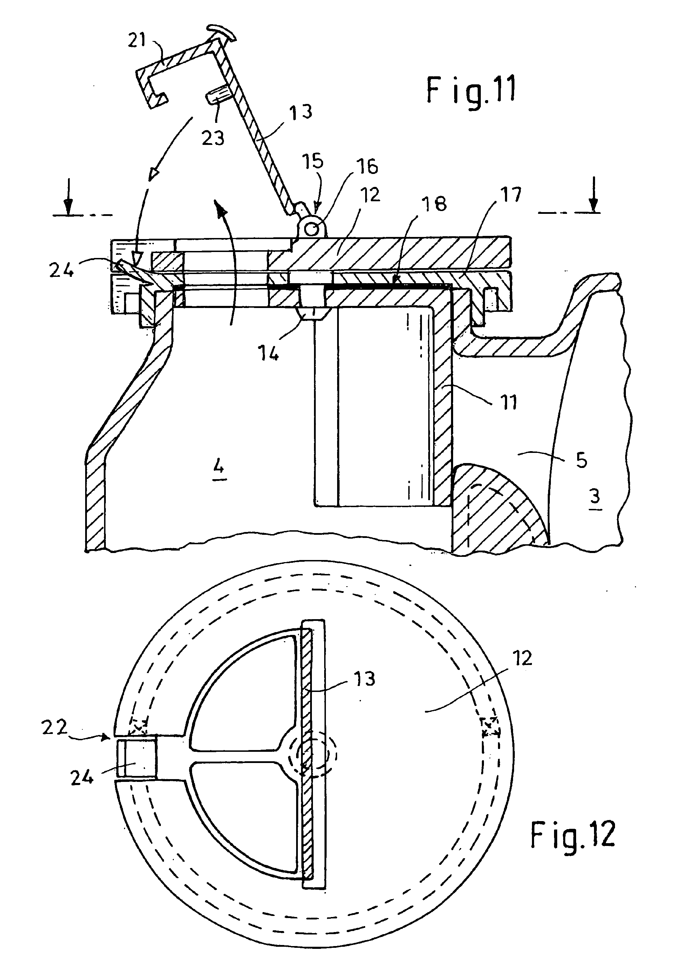

Der Absperrschieber 11 als Absperrorgan ist drehfest mit einem drehbaren Verschlussteil 12 des Deckelverschlusses 9 verbunden (siehe Figur 11).

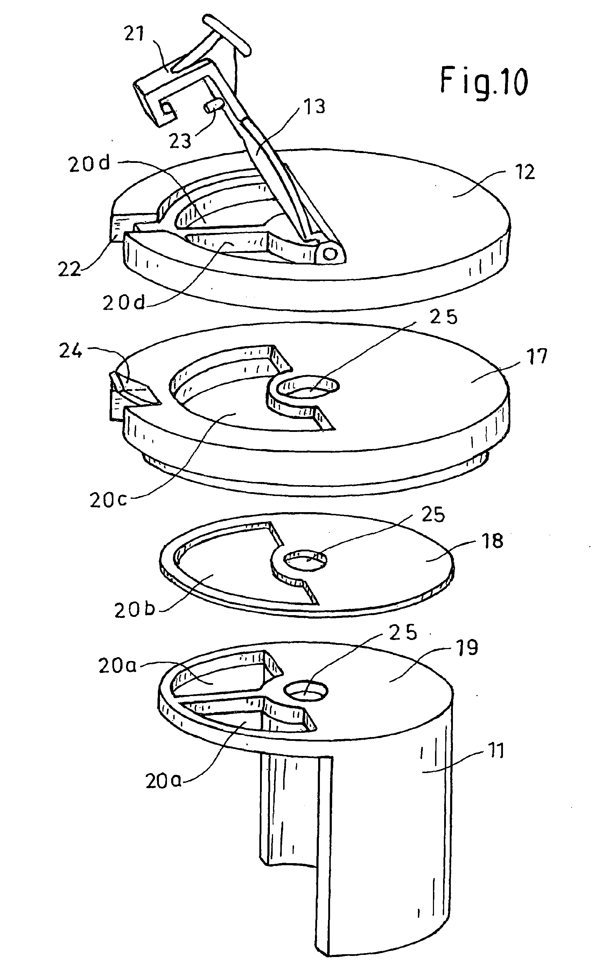

An dem drehbaren Verschlussteil 12 ist wiederum eine Verschlussklappe 13 angelenkt, die nur in einer Winkelstellung des drehbaren Verschlussteils 12 geöffnet werden kann, und zwar in derjenigen Winkelstellung in der der Absperrschieber 11 den Dosierkanal 5 verschließt. Das drehbare Verschlussteil 12 und der Absperrschieber 11 sind über ein einstückig an dem drehbaren Verschlussteil 12 vorgesehenen Rastzapfen 14 drehfest miteinander verbunden. Der Rastzapfen 14 ist in der Figur 10 dargestellten Ansicht nicht zu sehen.

Die Verschlussklappe ist bei dem dargestellten Ausführungsbeispiel über ein Scharnier 15 mit einem Scharnierstift 16 an dem drehbaren Verschlussteil 12 angeschlagen, alternativ kann das Scharnier 15 als Filmscharnier ausgebildet sein. Zwischen dem drehbaren Verschlussteil 12 und dem Absperrschieber 11 ist ein bezüglich der Entnahmeöffnung 6 drehfest angeordnetes Verschlussteil 17 vorgesehen. Zwischen dem drehfesten Verschlussteil 17 und dem Absperrschieber 11 ist eine Dichtscheibe 18 aus einem elastischen Kunststoff angeordnet.

Der Absperrschieber 11 ist einstückig mit einer kreisrunden Stauscheibe 19 verbunden, deren Durchmesser dem Durchmesser der Entnahmeöffnung etwa entspricht und welcher als Lochblende mit jeweils zwei viertelkreisförmig ausgebildeten Durchbrechungen 20 a versehen ist. Entsprechende Durchbrechungen 20 b, 20 c und 20 d sind jeweils in der Dichtscheibe 18 in dem drehfesten Verschlussteil 17 und in dem drehbarem Verschlussteil 12 vorgesehen. Weiterhin sind das drehfeste Verschlussteil 17, die Dichtscheibe 18 und die Stauscheibe 19 mit einer zentralen, kreisförmigen Befestigungsbohrung 25 versehen, die von dem Rastzapfen 14 durchsetzt wird, der eine drehfeste Verbindung zwischen den Verschlussteilen 17 und 12 herstellt. Dabei werden das drehfeste Verschlussteil 17 und die Stauscheibe 19 unter Zwischenlage der Dichtscheibe 18 gegeneinander gehalten, wobei die Stauscheibe 19 und der damit einstückig verbundene Absperrschieber 11 jede Drehbewegung des drehbaren Verschlussteils 12 mitvollziehen.

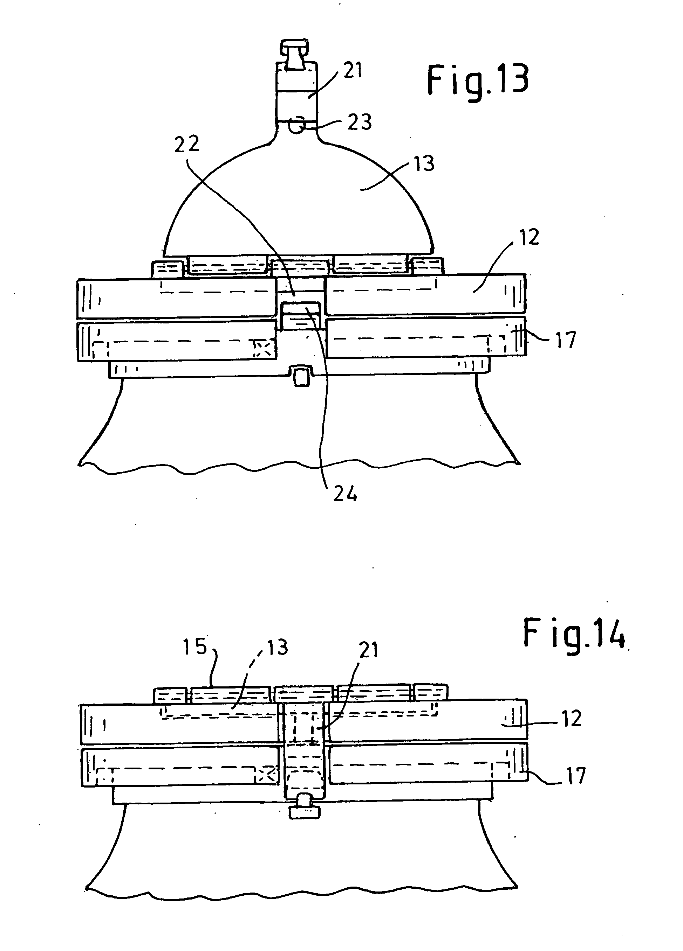

Es ist ohne Weiteres ersichtlich, dass nur in der Winkelstellung des drehbaren Verschlussteils 12, die in den Figuren 10 bis 14 dargestellt ist, die Durchbrechungen 20 a, b, c und d miteinander fluchten, sodass beim Anheben der Verschlussklappe 13 die Entnahmeöffnung 6 freigegeben wird.

In dieser Winkelstellung des drehbaren Verschlussteils 12 befindet sich der Absperrschieber 11 in der in Figur 2 dargestellten Lage, in welcher die Dosierkammer 4 und der Vorratsbehälter 3 nicht miteinander kommunizieren.

Andererseits ist, wie dies nachstehend noch erläutert wird, ein Auf- und Zuklappen der Verschlussklappe 13 nur in dieser Winkelstellung möglich.

Die Verschlussklappe 13 ist mit einem im Querschnitt C-förmigen hinterschnittenen Sicherungsbügel 21 versehen, dessen Querschnittsprofil so ausgebildet ist, dass dieser das randseitige Querschnittsprofil des drehfesten Verschlussteils 17 formschlüssig umgreifen kann. Sowohl in dem drehbaren Verschlussteil 12 als auch in dem drehfesten Verschlussteil 17 ist jeweils eine randseitig gelegene rechteckige Ausnehmung 22 vorgesehen. Beide Ausnehmungen 22 sind etwa von gleicher Breite und liegen in der in Figur 10 gezeigten Winkelstellung des drehbaren Verschlussteils 12 fluchtend übereinander, sodass der Verschlussbügel 21 bei eingeschwenkter Verschlussklappe 13 in die Ausnehmungen 22 eintauchen kann. In dieser Stellung drückt ein an der Unterseite der Verschlussklappe 13 vorgesehener Entriegelungsstift 23 auf eine in dem drehfesten Verschlussteil vorgesehene Federzunge 24. Die Federzunge fügt sich in der in Figur 10 dargestellten Winkelstellung des drehbaren Verschlussteils 12 in dessen Ausnehmung 22 ein, sodass der drehbare Verschlussteil 12 in der betreffenden Winkelstellung arretiert ist, solange die Verschlussklappe 13 sich in geöffnetem Zustand befindet. In geschlossenem, eingeschwenktem Zustand der Verschlussklappe 13 drückt der Entriegelungsstift die Federzunge 24 so herunter, dass diese sich in die Oberfläche des drehfesten Verschlussteils 17 einfügt und eine Drehbewegung des drehbaren Verschlussteils 12 zulässt.

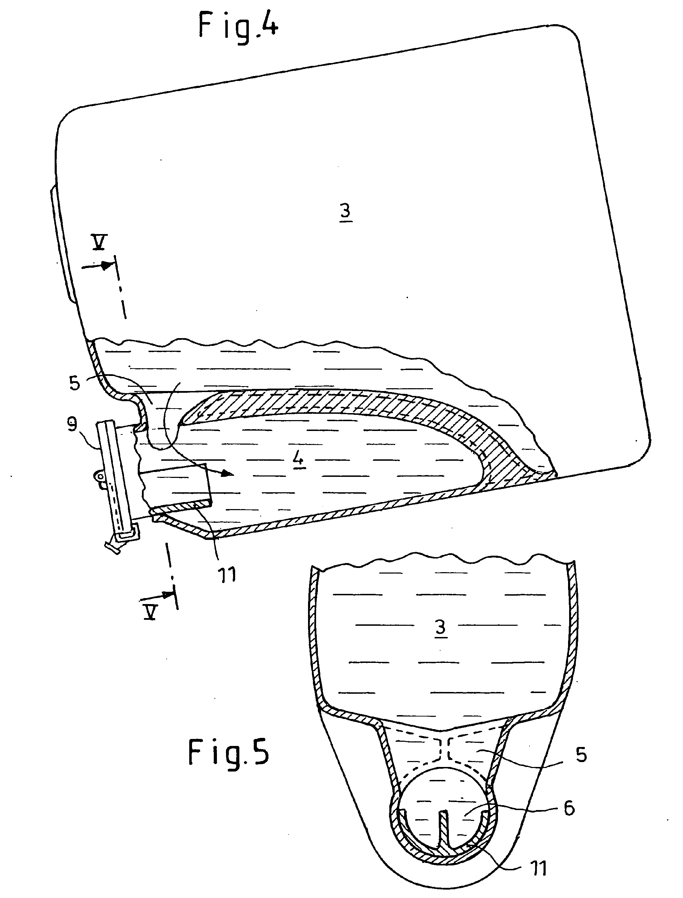

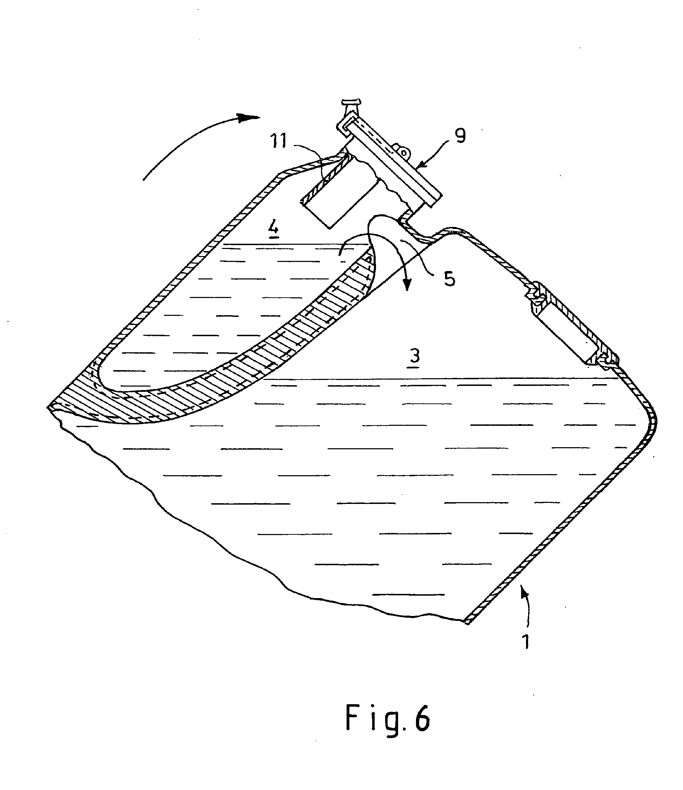

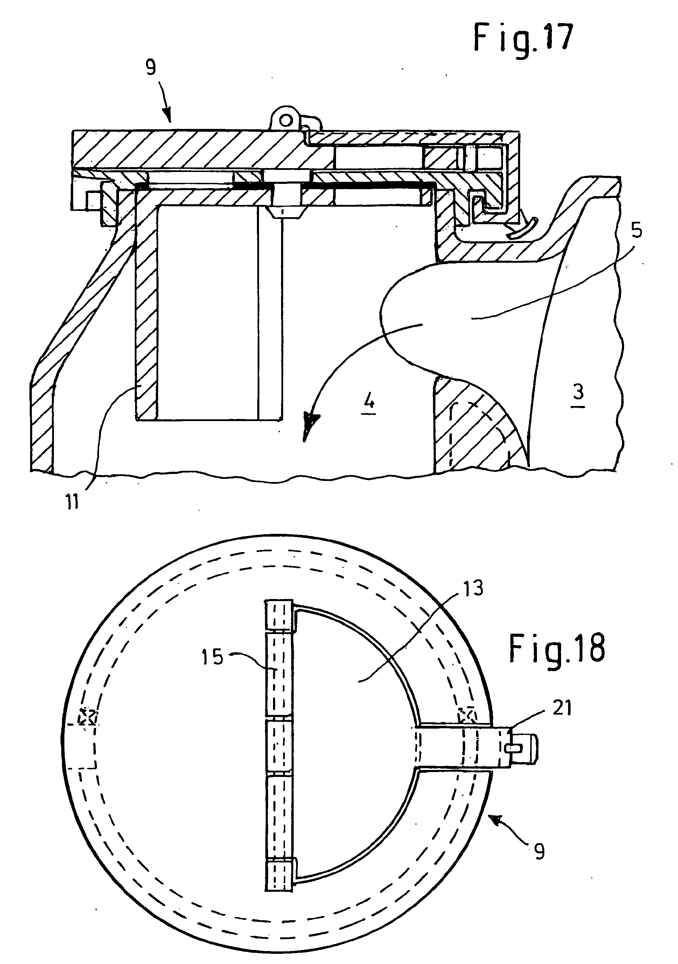

Sodann lässt sich das drehbare Verschlussteil 12 in die in Figuren 17 und 18 dargestellte Lage verdrehen, wobei der Verschlussbügel 21 den Rand des drehfesten Verschlussteils 17 umgreift und hintergreift. In dieser Stellung gibt der Absperrschieber 11 den Dosierkanal 5 zwischen der Dosierkammer 4 und dem Vorratsbehälter frei, sodass, wie dies in den Figuren 4 bis 6 dargestellt ist, entweder Füllgut von dem Vorratsbehälter 3 in die Dosierkammer 4 oder Füllgut von der Dosierkammer 4 zurück in den Vorratsbehälter 3 befördert werden kann. Diese Kippbewegung der Dosierflasche 1 kann solange vorgenommen werden, bis sich eine bestimmte vorgegebene Füllmenge in der Dosierkammer 4 angesammelt hat.

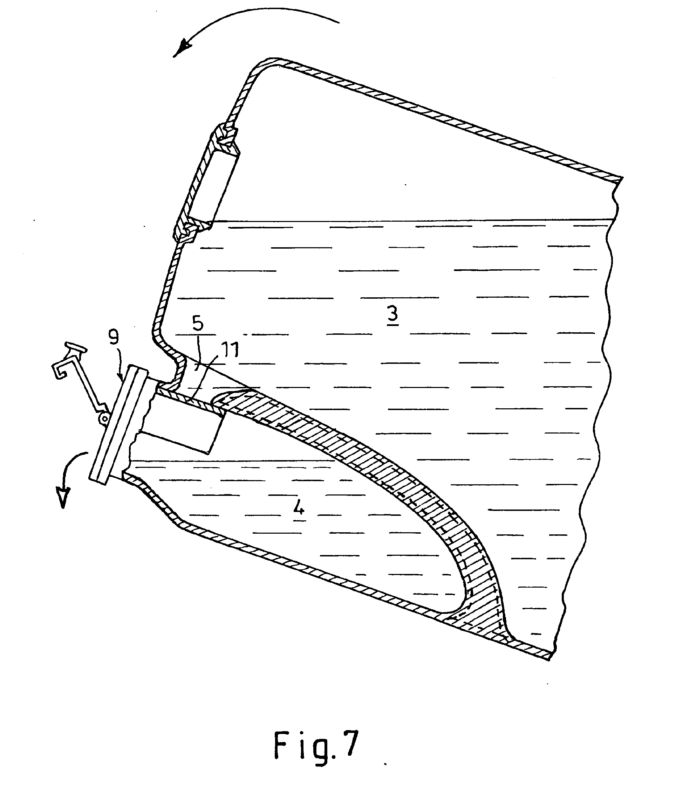

Sodann kann das drehbare Verschlussteil 12 in eine Winkelstellung gebracht werden, die ein Öffnen der Verschlussklappe 13 erlaubt. In dieser Winkelstellung ist der Dosierkanal 5 durch den Absperrschieber verschlossen, sodass eine Entnahme aus der Dosierkammer 4 möglich ist, ohne das Füllgut aus dem Vorratsbehälter 3 in die Dosierkammer 4 nachfließt, wie dies in Figur 7 dargestellt ist.

Der Absperrschieber 11 ist von seiner Formgebung und von seinem Funktionsprinzip wie ein Muschelschieber ausgebildet.

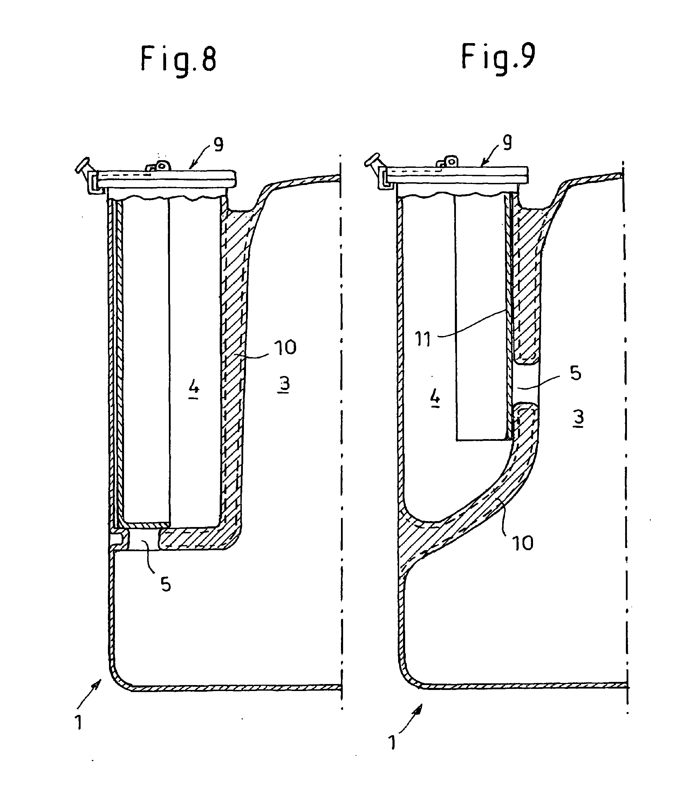

Eine alternative Ausgestaltung der Dosierkammer 4 und des Dosierkanals 5 sind in Figur 8 dargestellt. Dort ist der Dosierkanal im Bodenbereich der Dosierkammer 4 vorgesehen. Der Absperrschieber 11 erstreckt sich etwa über die gesamte Höhe der Dosierkammer und ist mit einem unteren Verschlusskörper 25 in Form einer Halbscheibe versehen.

Eine weitere Ausgestaltung der Dosierkammer und der Anordnung des Dosierkanals ist in Figur 9 dargestellt. Dort mündete der Dosierkanal 5 etwa auf halber Höhe der Dosierkammer 4 in diese. Der Absperrschieber 11 erstreckt sich über etwa 2/3 der Höhe der Dosierkammer 4.

Zu dem Deckelverschluss 9 ist noch erwähnenswert, dass, um eine entsprechende Dichtigkeit bei feinpulverigem oder flüssigem Füllgut zu erzielen, auf der Innenseite, d. h. auf der die Dichtscheibe 18 vorgesehenen Seite des drehfesten Verschlussteils, eine umlaufende Dichtrippe vorgesehen ist, die sich bei zusammengesetztem Verschluss in die Dichtscheibe 18 eindrückt.

Weiterhin sind an der Unterseite des Verschlussteils 17 in dem Bereich, der von dem Verschlussbügel 21 hintergriffen wird, wie dies in Figur 12 dargestellt ist, jeweils zwei diametral gegenüberliegend angeordnete Anschläge vorgesehen, an denen jeweils der Verschlussbügel 21 in der entriegelbaren Stellung (Figur 10) und in der verriegelten Stellung (Figur 17) anliegt.

Um ein Auflaufen des Entriegelungsstifts 21 auf die Federzunge 24 zu erleichtern, ist der Entriegelungsstift 23 jeweils seitlich angeschrägt.

### Bezugszeichenliste

- 1.: Dosierflasche 2.Aufstellfläche
- 3.: Vorratsbehälter 4. Dosierkammer
- 5.: Dosierkanal
- 6.: Entnahmeöffnung
- 7.: Befüllöffnung
- 8.: Verschlusskappe
- 9.: Deckelverschluss
- 10.: Materialsteg
- 11.: Absperrschieber
- 12.: drehbares Verschlussteil
- 13.: Verschlussklappe
- 14.: Rastzapfen
- 15.: Scharnier
- 16.: Scharnierzapfen
- 17.: drehbares Verschlussteil
- 18.: Dichtscheibe
- 19.: Stauscheibe
- 20a, b, c, d: Durchbrechungen
- 21.: Verschlussbügel
- 22.: Ausnehmungen
- 23.: Entrieglungsstift
- 24.: Federzunge
- 25.: Befestigungsbohrung

## Patentansprüche

1. Dosierbehältnis, insbesondere Dosierflasche (1) mit wenigstens einem Vorratsbehälter (3) und wenigstens einer Dosierkammer (4), die über eine Dosieröffnung miteinander verbunden sind, wobei die Dosierkammer (4) mit wenigstens einer in aufgestellter Lage oberen Entnahmeöffnung (6) versehen ist, die gegenüberliegend einer Aufstellfläche (2) des Dosierbehältnis angeordnet ist, wobei sich die Dosierkammer (4) in aufgestellter Lage neben dem Vorratsbehälter (3) erstreckt, die Dosieröffnung mit einem Absperrorgan (11) versehen ist und das Absperrorgan über einen Verschluss der Entnahmeöffnung (6) betätigbar ist, **dadurch gekennzeichnet, dass** das Absperrorgan sich bei geöffneter Entnahmeöffnung (6) in der die Dosieröffnung verschließenden Stellung befindet.

2. Dosierbehältnis nach Anspruch 1, **dadurch gekennzeichnet, dass** das Absperrorgan als Absperrschieber (11) ausgebildet ist, der mit einem drehbaren Verschluss der Entnahmeöffnung (6) verbunden ist.

3. Dosierbehältnis nach einem der Ansprüche 1 bis2, **dadurch gekennzeichnet, dass** sich das Absperrorgan bei verschlossener Entnahmeöffnung (6) in der die Dosieröffnung freigebenden Stellung befindet.

4. Dosierbehältnis nach einem der Ansprüche 1 bis 3, **dadurch gekennzeichnet, dass** der Verratsbehälter (3) und die Dosierkammer (4) miteinander über einen sich in Richtung der Dosierkammer (4) verjüngenden Dosierkanal (5) verbunden sind.

5. Dosierbehältnis nach einem der Ansprüche 1 bis 4, **dadurch gekennzeichnet, dass** der Dosierkanal (5) sich in einem Winkel zu dem Füllgutspiegel bei aufgestelltem Behältnis erstreckt.

6. Dosierbehältnis nach einem der Ansprüche 1 bis 5, **dadurch gekennzeichnet, dass** die Dosieröffnung oder der Dosierkanal (5) in aufgestellter Lage des Dosierbehältnises in den oberen Bereich der Dosierkammer (4) mündet.

7. Dosierbehältnis nach einem der Ansprüche 1 bis 6, **dadurch gekennzeichnet, dass** die Entnahmeöffnung (6) mit einem mehrteiligen Verschluss versehen ist, wobei ein erstes Verschlussteil als drehbares Verschlussteil (12) und ein zweites Verschlussteil als schwenkbare Verschlussklappe (13) ausgebildet ist.

8. Dosierbehältnis nach Anspruch 7, **dadurch gekennzeichnet, dass** das zweite Verschlussteil mit einem Verrieglungselement versehen ist, das nur in einer Winkelstellung des ersten Verschlussteils ver- und entriegelbar ist.

9. Dosierbehältnis nach einem der Ansprüche 1 bis8, **dadurch gekennzeichnet, dass** der Verschluss der Entnahmeöffnung (6) eine Lochblende umfasst, die in einer Winkelstellung des drehbaren Verschlussteils (12) freigegeben ist.

10. Dosierbehältnis nach einem der Ansprüche 1 bis9, **dadurch gekennzeichnet, dass** die Dosierkammer (4) und der Vorratsbehälter (3) einstückig miteinander verbunden sind.

11. Dosierbehältnis nach einem der Ansprüche 1 bis 10, **dadurch gekennzeichnet, dass** dieser einstückig durch Extrusionsblasformen erhalten wurde.

## Claims

1. Dosing receptacle, in particular a dosing bottle (1) with at least one storage container (3) and at least one dosing chamber (4) which are connected to one another via a dosing aperture, wherein the dosing chamber (4) is provided with at least one removal aperture (6) which is at the top in the standing position and which is arranged opposite a face (2) of the dosing receptacle on which it stands, and wherein the dosing chamber (4) extends alongside the storage container (3) in the standing position, the dosing aperture is provided with a shut-off component (11) and said shut-off component can be actuated via a closure belonging to the removal aperture (6), **characterised in that**, when the removal aperture (6) is open, the shut-off component is located in the position that closes the dosing aperture.

2. Dosing receptacle according to claim 1, **characterised in that** the shut-off component is constructed as a shut-off slide (11) which is connected to a rotatable closure belonging to the removal aperture (6).

3. Dosing receptacle according to either of claims 1 or 2, **characterised in that**, when the removal aperture (6) is closed, the shut-off component is located in the position that unblocks the dosing aperture.

4. Dosing receptacle according to one of claims 1 to 3, **characterised in that** the storage container (3) and the dosing chamber (4) are connected to one another via a dosing duct (5) which tapers in the direction of said dosing chamber (4).

5. Dosing receptacle according to one of claims 1 to 4, **characterised in that** the dosing duct (5) extends at an angle to the level of the filling product when the receptacle is standing.

6. Dosing receptacle according to one of claims 1 to 5, **characterised in that** the dosing aperture or the dosing duct (5) opens into the upper region of the dosing chamber (4) when the dosing receptacle is in the standing position.

7. Dosing receptacle according to one of claims 1 to 6, **characterised in that** the removal aperture (6) is provided with a multipart closure, a first closure part being constructed as a rotatable closure part (12) and a second closure part being constructed as a pivotable closure flap (13).

8. Dosing receptacle according to claim 7, **characterised in that** the second closure part is provided with a locking element which can only be locked and unlocked in one angular position of the first closure part.

9. Dosing receptacle according to one of claims 1 to 8, **characterised in that** the closure of the removal aperture (6) comprises a perforated screen which is unblocked in one angular position of the rotatable closure part (12).

10. Dosing receptacle according to one of claims 1 to 9, **characterised in that** the dosing chamber (4) and the storage container (3) are connected to one another in one piece.

11. Dosing receptacle according to one of claims 1 to 10, **characterised in that** said dosing receptacle has been obtained in one piece by extrusion blow moulding.

## Revendications

1. Récipient de dosage, en particulier bouteille de dosage (1) comprenant au moins un récipient de stockage (3) et au moins un compartiment de dosage (4) qui sont reliés l'un à l'autre par le biais d'une ouverture de dosage, dans lequel le compartiment de dosage (4) est muni d'au moins une ouverture de prise (6) supérieure dans une position verticale qui est située en opposition à une surface de pose (2) du récipient de dosage, et dans lequel le compartiment de dosage (4), dans une position verticale, s'étend à côté du récipient de stockage (3), l'ouverture de dosage est munie d'un organe d'arrêt (11) et l'organe d'arrêt peut être actionné par le biais d'une fermeture de l'ouverture de prise (6), **caractérisé en ce que** l'organe d'arrêt, lorsque l'ouverture de prise (6) est ouverte, se trouve dans la position fermant l'ouverture de dosage.

2. Récipient de dosage selon la revendication 1, **caractérisé en ce que** l'organe d'arrêt est réalisé sous la forme d'une vanne d'arrêt (11) qui est reliée à une fermeture rotative de l'ouverture de prise (6).

3. Récipient de dosage selon l'une des revendications 1 et 2, **caractérisé en ce que** l'organe d'arrêt, lorsque l'ouverture de prise (6) est fermée, se trouve dans la position libérant l'ouverture de dosage.

4. Récipient de dosage selon l'une des revendications 1 à 3, **caractérisé en ce que** le récipient de stockage (3) et le compartiment de dosage (4) sont reliés l'un à l'autre au moyen d'une conduite de dosage (5) se rétrécissant dans la direction du compartiment de dosage (4).

5. Récipient de dosage selon l'une des revendications 1 à 4, **caractérisé en ce que** la conduite de dosage (5) s'étend dans un angle par rapport au niveau du contenu lorsque le récipient est posé verticalement.

6. Récipient de dosage selon l'une des revendications 1 à 5, **caractérisé en ce que** l'ouverture de dosage ou la conduite de dosage (5), lorsque le récipient de dosage est dans une position verticale, débouche dans la partie supérieure du compartiment de dosage (4).

7. Récipient de dosage selon l'une des revendications 1 à 6, **caractérisé en ce que** l'ouverture de prise (6) est munie d'une fermeture composée de plusieurs parties, dont une première partie de fermeture est réalisée sous la forme d'un élément de fermeture rotatif (12) et une deuxième partie de fermeture sous la forme d'un bouchon de fermeture basculant (13).

8. Récipient de dosage selon la revendication 7, **caractérisé en ce que** la deuxième partie de fermeture est munie d'un élément de verrouillage qui peut uniquement être verrouillé et déverrouillé dans une position d'angle de la première partie de fermeture.

9. Récipient de dosage selon l'une des revendications 1 à 8, **caractérisé en ce que** la fermeture de l'ouverture de prise (6) comprend un diaphragme percé, qui est libéré dans une position d'angle de l'élément de fermeture rotatif (12).

10. Récipient de dosage selon l'une des revendications 1 à 9, **caractérisé en ce que** le compartiment de dosage (4) et le récipient de stockage (3) sont reliés l'un à l'autre d'une seule pièce.

11. Récipient de dosage selon l'une des revendications 1 à 10, **caractérisé en ce que** ce récipient a été obtenu d'une seule pièce au moyen d'un formage par extrusion-soufflage.
